# EUROPEAN PATENT APPLICATION

(11) **EP 4 183 655 A1**
(43) Date of publication of application: **24.05.2023**
(21) Application number: 22208672.0
(22) Date of filing: 21.11.2022
(51) Int. Cl.: B60W 50/023, B60W 50/02, B60W 50/029, B60W 60/00

(54) **METHOD AND IN-VEHICLE COMPUTING SYSTEM FOR CONTROLLING OPERATION OF AN AUTONOMOUS VEHICLE**

(30) Priority: 23.11.2021 US 202163264507 P
(71) Applicant: Tusimple, Inc., San Diego, CA 92122 (US)
(72) Inventor: Han, Xiaoling, San Diego, CA 92122 (US)
(74) Representative: Morrall, Jonathan Ian McLachlan

(57) **Abstract**

Devices, systems, and methods for a vehicular safety system in autonomous vehicles are described. An example of controlling operation of an autonomous vehicle includes monitoring, by a processor of a vehicle controller system, an operation of an autonomous vehicle controller onboard the autonomous vehicle, determining, during the monitoring, that a fault condition has occurred in the operation of the autonomous vehicle controller, and taking control of navigation of the autonomous vehicle based on the determining that the fault condition has occurred, wherein the taking control of navigation includes navigating the autonomous vehicle using a dedicated set of sensors for the navigation, and wherein the dedicated set of sensors is different from a main set of sensors used by the autonomous vehicle controller.

## Description

### CROSS-REFERENCE TO RELATED APPLICATION

This application claims the benefit of U.S. Provisional Patent Application No. 65/264,507, filed November 23, 2021, which is incorporated by reference herein in its entirety.

### TECHNICAL FIELD

This document generally relates to controlling vehicles, and in particular, a safety system for autonomous vehicles.

### BACKGROUND

Autonomous vehicle navigation is a technology for sensing the position and movement of a vehicle and, based on the sensing, autonomously controlling the vehicle to navigate towards a destination. Autonomous vehicles have important applications in transportation of people, goods and services. A vehicle safety system that leverages redundancy to ensure continuous and robust autonomous operation is paramount for the safety of the vehicle, as well as people and property in the vicinity of the vehicle.

### SUMMARY

Disclosed are devices, systems and methods related to vehicular safety systems for autonomous vehicles. In some implementations, this is achieved by a plurality of vehicle control units (VCUs) configured to operate independently of each other by using separate localization devices and different autonomous driving computers to implement highly reliable failure detection and fail-safe control operations. In one example, each of the vehicle control units (VCUs) is configured to directly receive location information that includes a raw location of the vehicle, thereby ensuring highly reliable operations even if fused location information is not available.

In an aspect, the disclosed technology can be implemented to provide a method of controlling operation of an autonomous vehicle. The method includes monitoring, by a processor of a vehicle controller system, an operation of an autonomous vehicle controller onboard the autonomous vehicle, determining, during the monitoring, that a fault condition has occurred in the operation of the autonomous vehicle controller, and taking control of navigation of the autonomous vehicle based on the determining that the fault condition has occurred, wherein the taking control of navigation includes navigating the autonomous vehicle using a dedicated set of sensors for the navigation, and wherein the dedicated set of sensors is different from a main set of sensors used by the autonomous vehicle controller.

In an aspect, the disclosed technology can be implemented to provide a vehicle safety system for controlling a vehicle. This system includes a first detection domain including a first localization device configured to generate location information that includes a first raw location of the vehicle and a first autonomous driving computer coupled to the first localization device to generate location information that includes a first fused location of the vehicle based on the first raw location, a second detection domain including a second localization device configured to generate location information that includes a second raw location of the vehicle and a second autonomous driving computer coupled to the second localization device to generate location information that includes a second fused location of the vehicle based on the second raw location, and a vehicle control domain including first and second vehicle control units configured to perform operations for identifying safety risks based on at least one of the first raw location, the second raw location, the first fused location, or the second fused location, wherein the first and second vehicle control units operate independently of each other.

In another aspect, the disclosed technology can be implemented to provide a vehicle safety system for controlling a vehicle. This system includes an object detection module including a set of sensors configured to detect objects proximate to the vehicle and a control unit coupled to the set of sensors to provide object information to first and second vehicle control units, a first localization device configured to generate location information that includes a first raw location of the vehicle, a second localization device configured to generate location information that includes a second raw location of the vehicle, a first autonomous driving computer coupled to the first localization device to generate location information that includes a first fused location of the vehicle based on the first raw location, the first autonomous driving computer including a first vehicle control unit configured to perform operations for identifying safety risks based on at least one of the first raw location, the first fused location, or the object information, and a second autonomous driving computer coupled to the second localization device to generate location information that include a second fused location of the vehicle based on the second raw location, the second autonomous driving computer including a second vehicle control unit configured to perform operations for identifying safety risks based on at least one of the second raw location, the second fused location, or the object information, wherein the first and second vehicle control units operate independently of each other. In some implementations, the set of sensors can include one or more radars and cameras configured to detect objects in front of the vehicle, and the control unit coupled to the set of sensors provides object information regarding the objects in front of the vehicle to the vehicle control units. In some implementations, the vehicle safety system may also include additional sensors that can detect objects at either side or behind the vehicle and use object information from the additional sensors along with object information from the front radars and cameras to control the vehicle. For example, when the vehicle safety system simultaneously detects an object in front of the vehicle detect and another vehicle closely behind the vehicle, the control unit can adjust the braking force to avoid a collision with the other vehicle.

The above and other aspects and features of the disclosed technology are described in greater detail in the drawings, the description and the claims.

### BRIEF DESCRIPTION OF THE DRAWINGS

FIG. 1 shows a block diagram of an example vehicle ecosystem in which an in-vehicle control computer located in the vehicle comprises a vehicle safety system (VSS).
FIG. 2 shows a block diagram of an example of a backup fail-safe system implemented based on some embodiments of the disclosed technology.
FIG. 3 shows a block diagram of another example of a backup fail-safe system implemented based on some embodiments of the disclosed technology.
FIG. 4 shows a flowchart of an example method for controlling operation of an autonomous vehicle.
FIG. 5 shows an example of a hardware platform that can implement some methods and techniques described in the present document.

### DETAILED DESCRIPTION

The transportation industry has been undergoing considerable changes in the way technology is used to control the operation of the vehicles. As exemplified in the automotive passenger vehicle, there has been a general advancement towards shifting more of the operational and navigational decision making away from the human driving and into on-board computing power. This is exemplified in the extreme by the numerous under-development autonomous vehicles. Current implementations are in intermediate stages, such as the partially-autonomous operation in some vehicles (e.g., autonomous acceleration and navigation, but with the requirement of a present and attentive driver), the safety-protecting operation of some vehicles (e.g., maintaining a safe following distance and automatic braking), the safety-protecting warnings of some vehicles (e.g., blind-spot indicators in side-view mirrors and proximity sensors), as well as ease-of-use operations (e.g., autonomous parallel parking).

Vehicle safety systems are critical as the autonomy of the vehicle increases. Traditional technology and implementations are ill-suited to provide operational safety for Level 4 (L4) systems, which indicates a high level of driving automation that does not require a human driver for most conditions. Traditional vehicle safety systems are typically L2 systems, which indicates a partial driving automation that only provides limited sensing information that cannot handle all operational scenarios. Furthermore, existing systems always have an on-board driver and thus cannot, by definition, meet the highest Automotive Safety Integrity Level (ASIL), e.g., ASIL D.

The default operating mode of an autonomous vehicle, which may be monitored by an automated driving system (ADS), can be changed to a minimal risk condition (MRC) mode if the vehicle safety system (VSS) detects that a current driving task cannot be adequately fulfilled or completed. The VSS determines which MRC mode that vehicle should shift to in order to ensure that the safety of the vehicle and the surroundings.

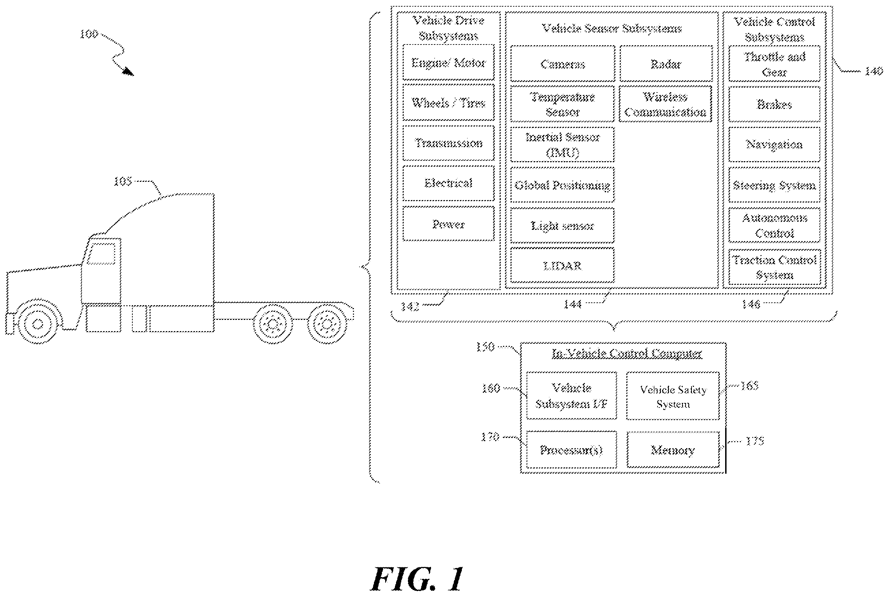

FIG. 1 shows a block diagram of an example vehicle ecosystem 100 in which an in-vehicle control computer 150 located in the autonomous vehicle 105 includes a synchronization unit that synchronizes multiple heterogeneous sensors. As shown in FIG. 1, the autonomous vehicle 105 may be a semi-trailer truck. The vehicle ecosystem 100 includes several systems and components that can generate and/or deliver one or more sources of information/data and related services to the in-vehicle control computer 150 that may be located in an autonomous vehicle 105. The in-vehicle control computer 150 can be in data communication with a plurality of vehicle subsystems 140, all of which can be resident in the autonomous vehicle 105. The in-vehicle control computer 150 and the plurality of vehicle subsystems 140 can be referred to as autonomous driving system (ADS). A vehicle subsystem interface 160 is provided to facilitate data communication between the in-vehicle control computer 150 and the plurality of vehicle subsystems 140. In some embodiments, the vehicle subsystem interface 160 can include a controller area network controller to communicate with devices in the vehicle subsystems 140.

The autonomous vehicle 105 may include various vehicle subsystems that support of the operation of autonomous vehicle 105. The vehicle subsystems may include a vehicle drive subsystem 142, a vehicle sensor subsystem 144, and/or a vehicle control subsystem 146. The components or devices of the vehicle drive subsystem 142, the vehicle sensor subsystem 144, and the vehicle control subsystem 146 as shown as examples. In some embodiment, additional components or devices can be added to the various subsystems or one or more components or devices can be removed. The vehicle drive subsystem 142 may include components operable to provide powered motion for the autonomous vehicle 105. In an example embodiment, the vehicle drive subsystem 142 may include an engine or motor, wheels/tires, a transmission, an electrical subsystem, and a power source.

The vehicle sensor subsystem 144 may include a number of sensors configured to sense information about an environment in which the autonomous vehicle 105 is operating or a condition of the autonomous vehicle 105. The vehicle sensor subsystem 144 may include one or more cameras or image capture devices, one or more temperature sensors, an inertial measurement unit (IMU), a localization system such as a Global Positioning System (GPS), a laser range finder/LiDAR unit, a RADAR unit, an ultrasonic sensor, and/or a wireless communication unit (e.g., a cellular communication transceiver). The vehicle sensor subsystem 144 may also include sensors configured to monitor internal systems of the autonomous vehicle 105 (e.g., an O2 monitor, a fuel gauge, an engine oil temperature, etc.,). In some embodiments, the vehicle sensor subsystem 144 may include sensors in addition to the sensors shown in FIG. 1.

The IMU may include any combination of sensors (e.g., accelerometers and gyroscopes) configured to sense position and orientation changes of the autonomous vehicle 105 based on inertial acceleration. The localization system may be any sensor configured to estimate a geographic location of the autonomous vehicle 105. For this purpose, the localization system may include a receiver/transmitter operable to provide information regarding the position of the autonomous vehicle 105 with respect to the Earth. The RADAR unit may represent a system that utilizes radio signals to sense objects within the environment in which the autonomous vehicle 105 is operating. In some embodiments, in addition to sensing the objects, the RADAR unit may additionally be configured to sense the speed and the heading of the objects proximate to the autonomous vehicle 105. The laser range finder or LiDAR unit may be any sensor configured to sense objects in the environment in which the autonomous vehicle 105 is located using lasers. The LiDAR unit may be a spinning LiDAR unit or a solid-state LiDAR unit. The cameras may include one or more cameras configured to capture a plurality of images of the environment of the autonomous vehicle 105. The cameras may be still image cameras or motion video cameras.

The vehicle control subsystem 146 may be configured to control operation of the autonomous vehicle 105 and its components. Accordingly, the vehicle control subsystem 146 may include various elements such as a throttle and gear, a brake unit, a navigation unit, a steering system and/or an autonomous control unit. The throttle may be configured to control, for instance, the operating speed of the engine and, in turn, control the speed of the autonomous vehicle 105. The gear may be configured to control the gear selection of the transmission. The brake unit can include any combination of mechanisms configured to decelerate the autonomous vehicle 105. The brake unit can use friction to slow the wheels in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the localization system and one or more predetermined maps so as to determine the driving path for the autonomous vehicle 105. The steering system may represent any combination of mechanisms that may be operable to adjust the heading of autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the localization system, the RADAR, the LiDAR, the cameras, and/or other vehicle subsystems to determine the driving path or trajectory for the autonomous vehicle 105.

The traction control system (TCS) may represent a control system configured to prevent the autonomous vehicle 105 from swerving or losing control while on the road. For example, TCS may obtain signals from the IMU and the engine torque value to determine whether it should intervene and send instruction to one or more brakes on the autonomous vehicle 105 to mitigate the autonomous vehicle 105 swerving. TCS is an active vehicle safety feature designed to help vehicles make effective use of traction available on the road, for example, when accelerating on low-friction road surfaces. When a vehicle without TCS attempts to accelerate on a slippery surface like ice, snow, or loose gravel, the wheels can slip and can cause a dangerous driving situation. TCS may also be referred to as electronic stability control (ESC) system.

Many or all of the functions of the autonomous vehicle 105 can be controlled by the in-vehicle control computer 150. The in-vehicle control computer 150 may include at least one processor 170 (which can include at least one microprocessor) that executes processing instructions stored in a non-transitory computer readable medium, such as the memory 175. The in-vehicle control computer 150 may also represent a plurality of computing devices that may serve to control individual components or subsystems of the autonomous vehicle 105 in a distributed fashion. In some embodiments, the memory 175 may contain processing instructions (e.g., program logic) executable by the processor 170 to perform various methods and/or functions of the autonomous vehicle 105, including those described for the vehicle safety system (VSS) 165 as explained in this patent document. For instance, the processor 170 executes the operations associated with the VSS 165 for ensuring safe operation of the autonomous vehicle, which includes switching from a default operating mode to a minimal risk condition (MRC) mode. The operations of the VSS 165 are further described in this patent document.

The memory 175 may contain additional instructions as well, including instructions to transmit data to, receive data from, interact with, or control one or more of the vehicle drive subsystem 142, the vehicle sensor subsystem 144, and the vehicle control subsystem 146. The in-vehicle control computer 150 may control the function of the autonomous vehicle 105 based on inputs received from various vehicle subsystems (e.g., the vehicle drive subsystem 142, the vehicle sensor subsystem 144, and the vehicle control subsystem 146).

Embodiments of the disclosed technology are configured to provide a vehicle safety system (VSS) for L4 autonomy (as defined by SAE J3016). In an example, this may be achieved by using multiple and redundant sensors, as well as different control loops, to implement both failure detection and fail-safe control. The VSS ensures that the appropriate operating mode for the vehicle is selected based on the health/operational status of the components that are operating the vehicle.

An autonomous driving system can include an artificial intelligence (AI) system. Autonomous vehicles (AV) are equipped with multiple sensors, such as cameras, radars and lidar, which help them better understand the surroundings and in path planning. These sensors generate a massive amount of data, and the AI system processes the data and train its autonomous driving systems.

In some implementations of the disclosed technology, in a case that hardware and/or software failures occur in situations when the vehicle is in motion, a backup fail-safe system may take the control of the vehicle and maintain it in a safety mode. In one example, the VSS may include the backup fail-safe system discussed below.

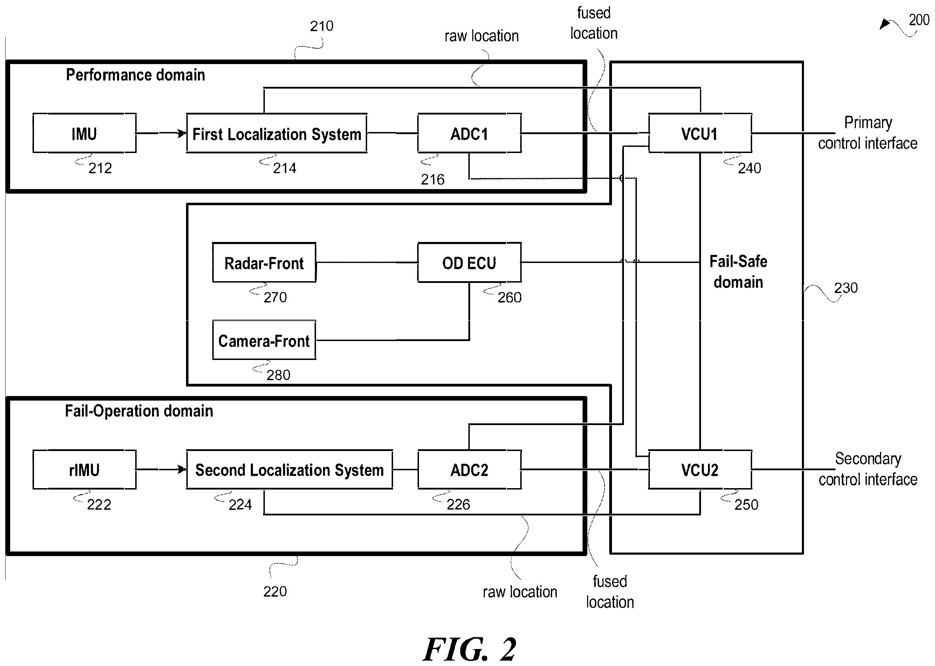

FIG. 2 shows a block diagram of an example of a backup fail-safe system 200 implemented based on some embodiments of the disclosed technology.

In some implementations, the backup fail-safe system may include a performance domain 210, a fail-operation domain 220, and a fail-safe domain 230. The performance domain 210 may include a first inertial measurement unit (IMU) 212, a first localization system 214, and a first autonomous driving computer (ADC) 216. The fail-operation domain 220 may include a second IMU 222, a second localization system 224, and a second ADC 226. The fail-safe domain 230 may include a first vehicle control unit (VCU) 240, a second VCU 250, an object detection (OD) electronic control unit (ECU) 260, a radar unit 270, and a camera unit 280.

The first IMU 212 is coupled to the first localization system 214, which is coupled to the first ADC 216 and the first VCU 240 to provide raw location information ("first raw location") to the first ADC 216 and the first VCU 240. The second IMU 222 is coupled to the second localization system 224, which is coupled to the second ADC 226 and the second VCU 250 to provide raw location information ("second raw location") to the second ADC 226 and the second VCU 250. The first ADC 216 may generate fused location information ("first fused location") based on at least the first raw location and/or information from other sensors. The second ADC 226 may generate fused location information ("second fused location") based on at least the second raw location and/or information from other sensors.

In some implementations of the disclosed technology, the first and second VCUs 240 and 250 may perform computations and operations for identifying certain safety risks based on raw location information and/or fused location information and/or information that is generated based on other sensors such as radar sensors or image sensors so that the vehicle can avoid a crash.

The first VCU 240 is coupled to the first ADC 216, the second ADC 226, and the OD ECU 260. In some implementations, the first VCU 240 may perform computations and operations for identifying certain safety risks based on the first fused location, the second fused location, and/or an output of the OD ECU 260, which is generated based on outputs of a set of sensors in the fail-safe domain 230. In this example, the set of sensors includes the radar unit 270 and the camera unit 280. In some implementations, the second VCU 250 may also perform computations and operations for identifying certain safety risks based on the first fused location, the second fused location, and/or the output of the OD ECU 260. Furthermore, the first VCU 240 and the second VCU 250 may directly receive the first raw location and/or the second raw location to perform computations and logical operations for identifying certain safety risks.

In some implementations of the disclosed technology, outputs of the first and second VCUs 240 and 250 are used for the operation of vehicle control components and are transmitted through a primary control interface and a secondary control interface, respectively. As shown in FIG. 2, the first VCU 240 may be a primary VCU coupled to the primary control interface, and the second VCU 250 may be a secondary (or redundant) VCU coupled to the secondary control interface.

In some implementations of the disclosed technology, the backup fail-safe system includes the first and second VCUs 240 and 250 that are always online. In one example, the second VCU 250 may perform computations and operations for identifying certain safety risks even when the first VCU 240 is functioning properly. In another example, the second VCU remains in an active standby mode while the first VCU 240 is in an active mode, enabling the second VCU 250 to immediately take over the control of the system as soon as a failure in the first VCU 240 is detected.

In some implementations of the disclosed technology, the first ADC 216 may use the outputs from the second ADC 226 regardless of whether the first ADC 216 is functioning properly. For example, in a case that the first ADC 216 and the second ADC 226 are functioning properly, the first VCU 240 may perform computations and operations for identifying certain safety risks based on the first fused location, which is generated by the first ADC 216 in the performance domain 210, and the second fused location, which is generated by the second ADC 226 in the fail-operation domain 220. In some implementations of the disclosed technology, the first ADC 216 may use the second ADC 226 as a back-up ADC. For example, if a failure occurs in the first ADC 216, the first VCU 240 may perform computations and operations for identifying certain safety risks based on the second fused location, which is generated by the second ADC 226 in the fail-operation domain 220.

In some implementations of the disclosed technology, the first VCU 240 and the second VCU 250 may directly receive the first raw location and/or the second raw location to perform computations and logical operations for identifying certain safety risks. In one example, when the first localization system 214 and the second localization system 224 are functioning properly, the first VCU 240 may perform computations and execute logical operations based on the first raw location, which is generated by the first localization system 214 in the performance domain 210, and the second raw location, which is generated by the second localization system 224 in the fail-operation domain 220. In some implementations of the disclosed technology, the first VCU 240 may use the second localization system 224 as a back-up localization system. In one example, the first VCU 240 may perform computations and operations for identifying certain safety risks based on the first raw location, which is generated by the first localization system 214 in the performance domain 210, and, if a failure occurs in the first localization system, the first VCU 240 may perform computations and operations for identifying certain safety risks based on the second raw location, which is generated by the second localization system 224 in the fail-operation domain 220.

In some implementations of the disclosed technology, the first VCU 240 and the second VCU 250 may directly receive the first raw location and/or the second raw location to use the raw location information currently with the first ADC 216 and/or the second ADC 226. In some implementations, the first VCU 240 and the second VCU 250 may directly receive the first raw location and/or the second raw location only when a failure occurs in the first ADC 216 and/or the second ADC 226. In other implementations, the first VCU 240 and the second VCU 250 may directly receive the first raw location and/or the second raw location even when no failure occurs in the first ADC 216 and/or the second ADC 226.

In some implementations of the disclosed technology, the first VCU 240 and the second VCU 250 may operate independently of each other. In one example, the primary and secondary VCUs are configured to operate using separate power supplies and separate control signal sources.

In some implementations of the disclosed technology, sensor outputs and outputs from the performance domain 210 and the fail-operation domain 220 are provided separately to the first and second VCUs 240 and 250 (e.g., primary and secondary VCUs). In the example shown in FIG. 2, the sensors (e.g., radar, camera) in the fail-safe domain 230 provides inputs to the OD ECU 260, and the OD ECU 260 provides inputs to the first and second VCUs 240 and 250. To improve the redundancy, the first ADC 216 in the performance domain 210 provides inputs to both the first and second VCUs 240 and 250, and the second ADC 226 in the fail-operation domain 220 provides inputs to both the first and second VCUs 240 and 250. In another example, although not shown, the first localization system 214 may provide inputs to both the first and second VCUs 240 and 250, and the second localization system 224 may also provide inputs to both the first and second VCUs 240 and 250.

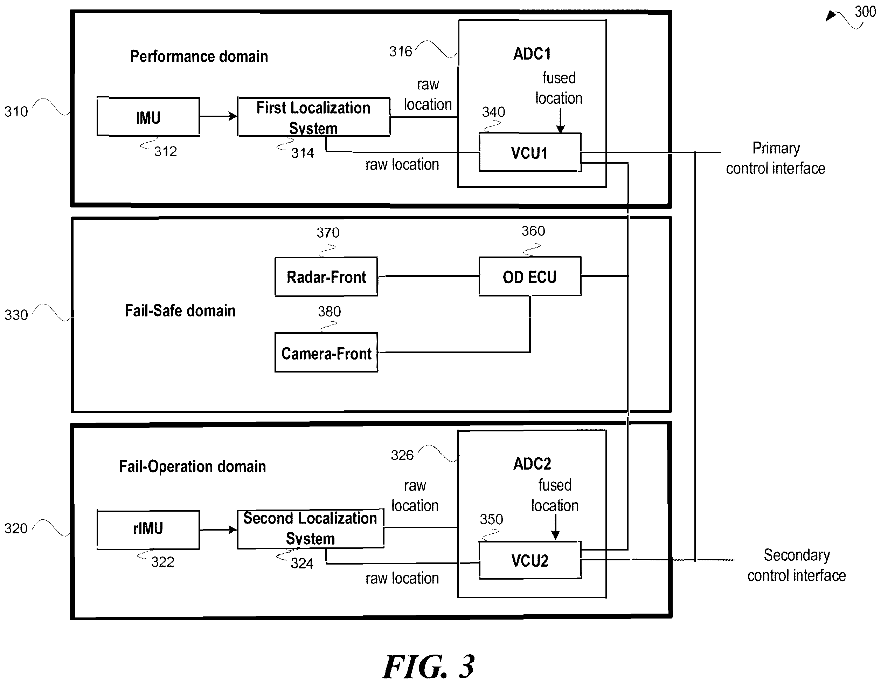

FIG. 3 shows a block diagram of another example of a backup fail-safe system 300 implemented based on some embodiments of the disclosed technology.

In some implementations, the backup fail-safe system 300 may include a performance domain 310, a fail-operation domain 320, and a fail-safe domain 330. The performance domain 310 may include a third inertial measurement unit (IMU) 312, a third localization system 314, and a third autonomous driving computer (ADC) (e.g., primary ADC or ADC1) 316. The fail-operation domain 320 may include a fourth IMU 322, a fourth localization system 324, and a fourth ADC (e.g., secondary ADC or ADC2) 326. The fail-safe domain 330 may include an object detection (OD) electronic control unit (ECU) 360, a radar unit 370, and a camera unit 380. In one example, the localization system may include a global positioning system (GPS).

The third IMU 312 is coupled to the third localization system 314, which is coupled to the third ADC 316 and the third VCU 340 in the third ADC 316 to provide raw location information ("third raw location") to the third ADC 316 and the third VCU 340 in the third ADC 316. The fourth IMU 322 is coupled to the fourth localization system 324, which is coupled to the fourth ADC 326 and the fourth VCU 350 in the fourth ADC 326 to provide raw location information ("fourth raw location") to the fourth ADC 326 and the fourth VCU 350 in the fourth ADC 326. The third ADC 316 may generate fused location information ("third fused location") based on at least the third raw location and/or information from other sensors. The fourth ADC 326 may generate fused location information ("fourth fused location") based on at least the fourth raw location and/or information from other sensors.

In some implementations of the disclosed technology, the third ADC 316 in the performance domain 310 includes a third vehicle control unit (VCU) (e.g., primary VCU or VCU1) 340, and the fourth ADC 326 in the fail-operation domain 320 includes a fourth VCU 350 (e.g., secondary VCU or VCU2). In one example, the third and fourth VCUs 340 and 350 may perform computations and operations for identifying certain safety risks based on raw location information and/or fused location information and/or information that is generated based on other sensors such as radar sensors or image sensors so that the vehicle can avoid a crash.

The third VCU 340 arranged in the third ADC 316 is coupled to the fourth ADC 326 and the OD ECU 360. In some implementations, the third VCU 340 may perform computations and operations for identifying certain safety risks based on the third fused location, the fourth fused location, and/or an output of the OD ECU 360, which is generated based on outputs of a set of sensors in the fail-safe domain 330. In this example, the set of sensors includes the radar unit 370 and the camera unit 380. In some implementations, the fourth VCU 350 may also perform computations and operations for identifying certain safety risks based on the third fused location, the fourth fused location, and/or the output of the OD ECU 360. Furthermore, the third VCU 340 and the fourth VCU 350 may directly receive raw location information. For example, the third VCU 340 directly receives the third raw location and the fourth VCU 350 directly receives the fourth raw location to perform computations and logical operations for identifying certain safety risks.

In some implementations of the disclosed technology, outputs of the third and fourth VCUs 340 and 350 are used for the operation of vehicle control components and are transmitted through a primary control interface and a secondary control interface, respectively. As shown in FIG. 3, the third VCU 340 may be a primary VCU coupled to the primary control interface, and the fourth VCU 350 may be a secondary (or redundant) VCU coupled to the secondary control interface.

In some implementations of the disclosed technology, the backup fail-safe system includes the third and fourth VCUs 340 and 350 that are always online. In one example, the fourth VCU 350 may perform computations and operations for identifying certain safety risks even when the third VCU 340 is functioning properly. In another example, the fourth VCU 350 remains in an active standby mode while the third VCU 340 is in an active mode, enabling the fourth VCU 350 to immediately take over the control of the system as soon as a failure in the third VCU 340 is detected.

In some implementations of the disclosed technology, the third ADC 316 may use the outputs from the fourth ADC 326 regardless of whether the third ADC 316 is functioning properly. For example, in a case that the third ADC 316 and the fourth ADC 326 are functioning properly, the third VCU 340 may perform computations and operations for identifying certain safety risks based on the third fused location, which is generated by the third ADC 316 in the performance domain 310, and the fourth fused location, which is generated by the fourth ADC 326 in the fail-operation domain 320. In some implementations of the disclosed technology, the third ADC 316 may use the fourth ADC 326 as a back-up ADC. For example, if a failure occurs in the third ADC 316, the third VCU 340 may perform computations and operations for identifying certain safety risks based on the fourth fused location, which is generated by the fourth ADC 326 in the fail-operation domain 320.

In some implementations of the disclosed technology, the third VCU 340 directly receives the third raw location and the fourth VCU 350 directly receives the fourth raw location to perform computations and logical operations for identifying certain safety risks. In other implementations, although not shown, the third VCU 340 may directly receive the fourth raw location, and the fourth VCU 350 may directly receive the fourth raw location to perform computations and logical operations for identifying certain safety risks. In one example, when the third localization system 314 and the fourth localization system 324 are functioning properly, the third VCU 340 may perform computations and execute logical operations based on the third raw location, which is generated by the third localization system 314 in the performance domain 310, and the fourth raw location, which is generated by the fourth localization system 324 in the fail-operation domain 320.

In some implementations of the disclosed technology, the third VCU 340 may use the fourth localization system as a back-up localization system, and the fourth VCU 350 may use the third localization system as a back-up localization system. In one example, the third VCU 340 may perform computations and operations for identifying certain safety risks based on the third raw location, which is generated by the third localization system 314 in the performance domain 310, and, if a failure occurs in the third localization system 314, the third VCU 340 may perform computations and operations for identifying certain safety risks based on the fourth raw location, which is generated by the fourth localization system 324 in the fail-operation domain 320. Likewise, the fourth VCU 350 may perform computations and operations for identifying certain safety risks based on the fourth raw location, which is generated by the fourth localization system 324 in the fail-operation domain 320, and, if a failure occurs in the fourth localization system 324, the fourth VCU 350 may perform computations and operations for identifying certain safety risks based on the third raw location, which is generated by the third localization system 314 in the performance domain 310.

In some implementations of the disclosed technology, the third VCU 340 and the fourth VCU 350 may directly receive the third raw location and/or the fourth raw location to use the raw location information currently with the third ADC 316 and/or the fourth ADC 326. In some implementations, the third VCU 340 and the fourth VCU 350 may directly receive the third raw location and/or the fourth raw location only when a failure occurs in the third ADC 316 and/or the fourth ADC 326. In other implementations, the third VCU 340 and the fourth VCU 350 may directly receive the third raw location and/or the fourth raw location even when no failure occurs in the third ADC 316 and/or the fourth ADC 326.

In some implementations of the disclosed technology, the third VCU 340 and the fourth VCU 350 may operate independently of each other. In one example, since the third VCU 340 is in the performance domain 310 and the fourth VCU 350 is in the fail-operation domain, the third VCU 340 and the fourth VCU 350 can operate independently of each other using separate power supplies and separate control signal sources that are fed to the third ADC 316 and the fourth ADC 326, respectively.

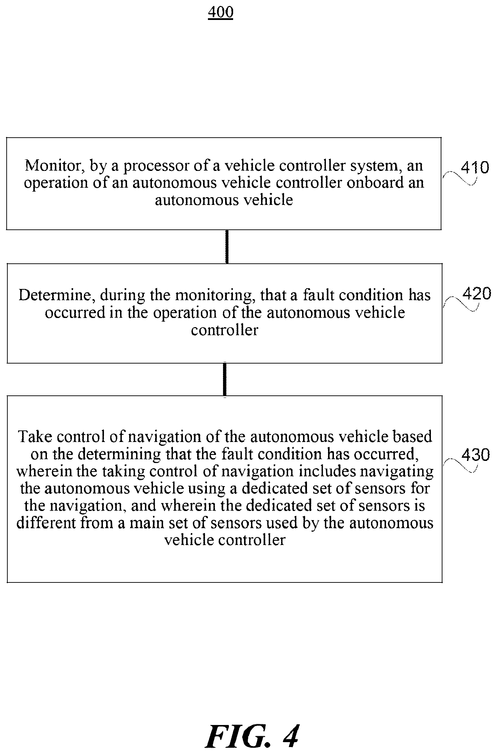

FIG. 4 shows a flowchart of an example method 400 for controlling operation of an autonomous vehicle. The method 400 includes, at 410, monitoring, by a processor of a vehicle controller system, an operation of an autonomous vehicle controller onboard the autonomous vehicle, at 420, determining, during the monitoring, that a fault condition has occurred in the operation of the autonomous vehicle controller, and at 430, taking control of navigation of the autonomous vehicle based on the determining that the fault condition has occurred, wherein the taking control of navigation includes navigating the autonomous vehicle using a dedicated set of sensors for the navigation, and wherein the dedicated set of sensors is different from a main set of sensors used by the autonomous vehicle controller.

In some embodiments, the main set of sensors may include at least one of a first localization system such as a Global Positioning System (GPS), a first inertial measurement unit (IMU), a first camera, or a first radar. The dedicated set of sensors may include at least one of a second localization system, a second IMU, a second camera, or a second radar.

In some embodiments, the dedicated set of sensors may have the same configuration as the main set of sensors. In one example, the dedicated set of sensors may have the same precision as the main set of sensors. In other embodiments, the dedicated set of sensors may have a different configuration from the main set of sensors. In one example, the main set of sensors may have better precision than the dedicated set of sensors. In another example, the dedicated set of sensors may be encased in weather-proof casing, and may be made of electronics with a higher mean time between failure (MTBF).

In some embodiments, the dedicated set of sensors may use an entirely separate set of hardware, power supply, connector cables, etc. In one example, the main set of sensors is coupled to a first power source configured to power the main set of sensors, and the dedicated set of sensors is coupled to a second power source, different from the first power source, configured to power the dedicated set of sensors. In one example, the main set of sensors is coupled to other components via a first set of connectors, and the dedicated set of sensors is coupled to other components via a second set of connectors different from the first power source.

In some embodiments, the using of the dedicated set of sensors includes using raw sensor data that is obtained directly from the dedicated set of sensors.

In some embodiments, the using of the raw sensor data comprises determining, during the monitoring, that a fault condition has occurred in the main set of sensors, and obtaining the raw sensor data from the dedicated set of sensors.

In some embodiments, the vehicle controller unit includes a redundant vehicle control unit, and wherein the taking control of navigation includes switching the autonomous vehicle controller to the redundant vehicle control unit upon occurrence of the fault condition.

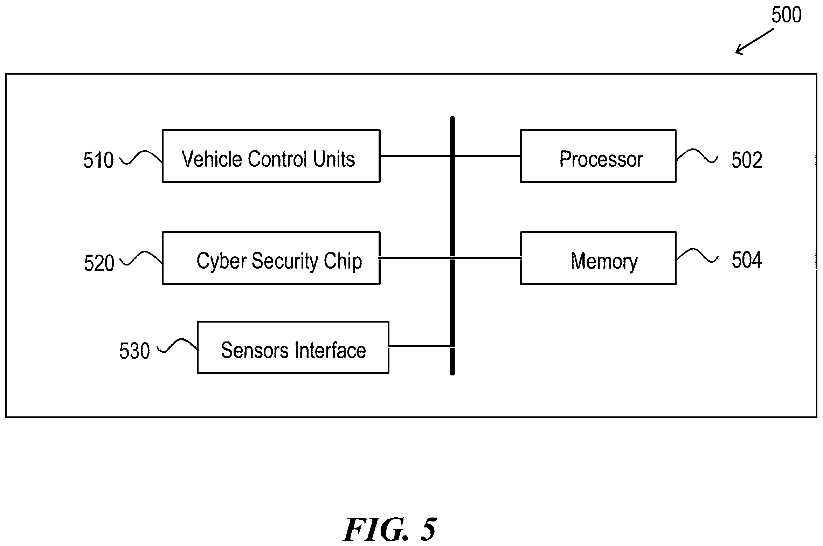

FIG. 5 shows an example of a hardware platform 500 that can be used to implement some of the techniques described in this patent document. The hardware platform 500 may include a high-performance computing processor 502 that can execute code to implement some of the techniques described in this patent document. The hardware platform 500 may include a memory 504 that may be used to store processor-executable code and/or store data. The hardware platform 500 may further include a VCU 510. In some embodiments, the VCU 510 may include a microcontroller unit (MCU) and a control interface. For example, the control interface may implement one or more intra-vehicular communication protocols. The hardware platform may further include a cyber security chip 520 and a sensor interface 530.

An example vehicle safety system includes a first detection domain including a first localization device configured to generate location information that includes a first raw location of the vehicle and a first autonomous driving computer coupled to the first localization device to generate location information that includes a first fused location of the vehicle based on the first raw location, a second detection domain including a second localization device configured to generate location information that includes a second raw location of the vehicle and a second autonomous driving computer coupled to the second localization device to generate location information that includes a second fused location of the vehicle based on the second raw location, and a vehicle control domain including first and second vehicle control units configured to perform operations for identifying safety risks based on objects proximate to the vehicle and at least one of the first raw location, the second raw location, the first fused location, or the second fused location of the vehicle, wherein the first and second vehicle control units operate independently of each other.

In some embodiments, the localization devices may include localization systems such as GPS.

In some embodiments, the first and second vehicle control units configured to remain in an active standby mode to take over a responsibility of the first vehicle control unit upon detection of failure in the first vehicle control unit

In some embodiments, the vehicle control domain further includes a set of sensors configured to detect objects proximate to the vehicle, and a control unit coupled to the set of sensors to provide object information to first and second vehicle control units.

In some embodiments, the first and second vehicle control units configured to perform operations for identifying safety risks based on at least one of the first raw location, the second raw location, the first fused location, the second fused location, or the object information.

In some embodiments, the set of sensors includes at least one of a light detection and ranging (LiDAR) system, a radar sensor, an ultrasonic sensor, or an image sensor.

In some embodiments, the first autonomous driving computer is configured to provide a first control signal to a primary control interface to control the vehicle (e.g., safety stop, emergency lane keeping) upon detecting the safety risks.

In some embodiments, the second autonomous driving computer is configured to supplement the first autonomous driving computer to provide a second control signal to a secondary control interface to control the vehicle (e.g., safety stop, emergency lane keeping) upon detecting the safety risks.

In some embodiments, the second autonomous driving computer is configured to provide a second control signal to a secondary control interface to control the vehicle in a case that a failure is detected in the first autonomous driving computer.

In some embodiments, the first and second vehicle control units are configured to directly receive at least one of: the location information that includes the first raw location of the vehicle from the first localization device; or the location information that includes the second raw location of the vehicle from the second localization device.

In some embodiments, the first vehicle control unit is configured to use at least one of: the first fused location in a case that no failure is detected in the first autonomous driving computer; the second fused location in a case that no failure is detected in the second autonomous driving computer; or the first raw location in a case that a failure is detected in the first autonomous driving computer.

In some embodiments, the second vehicle control unit is configured to use at least one of: the second fused location in a case that no failure is detected in the first autonomous driving computer; the first fused location in a case that no failure is detected in the second autonomous driving computer; or the second raw location in a case that a failure is detected in the second autonomous driving computer.

In some embodiments, the first detection domain further includes a first inertial measurement unit (IMU), and wherein the second detection domain further includes a second IMU.

Another example vehicle safety system includes an object detection module including a set of sensors configured to detect objects proximate to the vehicle and a control unit coupled to the set of sensors to provide object information to first and second vehicle control units, a first localization device configured to generate location information that includes a first raw location of the vehicle, a second localization device configured to generate location information that includes a second raw location of the vehicle, a first autonomous driving computer coupled to the first localization device to generate location information that includes a first fused location of the vehicle based on the first raw location, the first autonomous driving computer including a first vehicle control unit configured to perform operations for identifying safety risks based on at least one of the first raw location, the first fused location, or the object information, and a second autonomous driving computer coupled to the second localization device to generate location information that include a second fused location of the vehicle based on the second raw location, the second autonomous driving computer including a second vehicle control unit configured to perform operations for identifying safety risks based on at least one of the second raw location, the second fused location, or the object information, wherein the first and second vehicle control units operate independently of each other.

In some embodiments, the first and second vehicle control units configured to perform operations for identifying safety risks based on the object information and at least one of the first raw location, the second raw location, the first fused location, the second fused location, or the object information.

In some embodiments, the set of sensors includes at least one of a light detection and ranging (LiDAR) system, a radar sensor, an ultrasonic sensor, or an image sensor.

In some embodiments, the first autonomous driving computer is configured to provide a first control signal to a primary control interface to control the vehicle upon detecting the safety risks.

In some embodiments, the second autonomous driving computer is configured to supplement the first autonomous driving computer to provide a second control signal to a secondary control interface to control the vehicle upon detecting the safety risks.

In some embodiments, the second autonomous driving computer is configured to provide a second control signal to a secondary control interface to control the vehicle in a case that a failure is detected in the first autonomous driving computer.

In some embodiments, the first vehicle control unit is configured to directly receive, from the first localization device, the location information that includes the first raw location of the vehicle.

In some embodiments, the second vehicle control unit is configured to directly receive, from the second localization device, the location information that includes the second raw location of the vehicle.

In some embodiments, the first detection domain further includes a first IMU, and wherein the second detection domain further includes a second IMU.

An example method of controlling a vehicle includes providing a first vehicle control unit that performs operations for identifying safety risks in an active mode and a second vehicle control unit that remains in an active standby mode to take over a responsibility of the first vehicle control unit upon detection of failure in the first vehicle control unit, determining whether to activate the second vehicle control unit based on a checking of whether a failure has occurred in the first vehicle control unit, obtaining a fused location of the vehicle from at least one of a first autonomous driving computer or a second autonomous driving computer based on a checking of whether a failure has occurred in any of the first autonomous driving computer or the second autonomous driving computer, obtaining a raw location of the vehicle from a localization device in a case that a failure has occurred in the first autonomous driving computer and the second autonomous driving computer, and controlling the vehicle upon detecting the safety risks.

In some embodiments, the obtaining of the fused location of the vehicle includes obtaining a first fused location of the vehicle in a case that no failure is detected in the first autonomous driving computer, or obtaining a second fused location of the vehicle in a case that a failure is detected in the first autonomous driving computer.

In some embodiments, the method further includes obtaining object information associated with objects proximate to the vehicle.

In some embodiments, the safety risks are detected based on the object information and at least one of the fused location or the raw location of the vehicle.

Another example method of controlling a vehicle includes performing a determination of whether a processor that is configured to generate processed sensor data by processing raw sensor data generated by a sensor satisfies a predetermined functional condition, performing a vehicle control operation by a vehicle control unit to control the vehicle based on the processed sensor data upon determination that the processor satisfies the predetermined functional condition, or performing the vehicle control operation by the vehicle control unit to control the vehicle based on the raw sensor data received directly from the sensor upon determination that the processor fails to satisfy the predetermined functional condition.

In some embodiments, the processor includes an autonomous driving computer configured to generate processed sensor data that includes a fused location of the vehicle based on raw sensor data that includes a raw location of the vehicle.

In some embodiments, the method further includes performing a determination of which one of a plurality of sensors configured to generate raw sensor data satisfies a predetermined functional condition, and obtaining the raw sensor data from one or more of the plurality of sensors that satisfy the predetermined functional condition.

In some embodiments, the method further includes performing a determination of whether the vehicle control unit satisfies a predetermined functional condition, and switching the vehicle control unit to a redundant vehicle control unit upon determination that the vehicle control unit fails to satisfy a predetermined functional condition.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

Also disclosed herein are the following numbered clauses:
1. A method of controlling operation of an autonomous vehicle, comprising:
   monitoring, by a processor of a vehicle controller system, an operation of an autonomous vehicle controller onboard the autonomous vehicle;
   determining, during the monitoring, that a fault condition has occurred in the operation of the autonomous vehicle controller; and
   taking control of navigation of the autonomous vehicle based on the determining that the fault condition has occurred,
   wherein the taking control of navigation includes navigating the autonomous vehicle using a dedicated set of sensors for the navigation,
   wherein the dedicated set of sensors is different from a main set of sensors used by the autonomous vehicle controller.
2. The method of clause 1, wherein the using of the dedicated set of sensors includes using raw sensor data that is obtained directly from the dedicated set of sensors.
3. The method of clause 2, wherein the using of the raw sensor data comprises:
   determining, during the monitoring, that a fault condition has occurred in the main set of sensors; and
   obtaining the raw sensor data from the dedicated set of sensors.
4. The method of clause 1, wherein the vehicle controller unit includes a redundant vehicle control unit, and wherein the taking control of navigation includes switching the autonomous vehicle controller to the redundant vehicle control unit in response to determining that the fault condition has occurred.
5. A vehicle safety system for controlling a vehicle, comprising:
   a first detection domain including a first localization device configured to generate location information that includes a first raw location of the vehicle and a first autonomous driving computer coupled to the first localization device to generate location information that includes a first fused location of the vehicle based on the first raw location;
   a second detection domain including a second localization device configured to generate location information that includes a second raw location of the vehicle and a second autonomous driving computer coupled to the second localization device to generate location information that includes a second fused location of the vehicle based on the second raw location; and
   a vehicle control domain including first and second vehicle control units configured to perform operations for identifying safety risks based on objects proximate to the vehicle and at least one of the first raw location, the second raw location, the first fused location, or the second fused location of the vehicle, wherein the first and second vehicle control units operate independently of each other.
6. The system of clause 5, wherein the second vehicle control unit is configured to remain in an active standby mode to take over a responsibility of the first vehicle control unit upon detection of failure in the first vehicle control unit.
7. The system of clause 5, wherein the vehicle control domain further comprises:
   a set of sensors configured to detect the objects proximate to the vehicle; and
   a control unit coupled to the set of sensors to provide object information to first and second vehicle control units.
8. The system of clause 5, wherein the first autonomous driving computer is configured to provide a first control signal to a primary control interface to control the vehicle upon detecting the safety risks.
9. The system of clause 8, wherein the second autonomous driving computer is configured to supplement the first autonomous driving computer to provide a second control signal to a secondary control interface to control the vehicle upon detecting the safety risks.
10. The system of clause 8, wherein the second autonomous driving computer is configured to provide a second control signal to a secondary control interface to control the vehicle in a case that a failure is detected in the first autonomous driving computer.
11. The system of clause 5, wherein the first and second vehicle control units are configured to directly receive at least one of: the location information that includes the first raw location of the vehicle from the first localization device; or the location information that includes the second raw location of the vehicle from the second localization device.
12. The system of clause 11, wherein the first vehicle control unit is configured to use at least one of: the first fused location in a case that no failure is detected in the first autonomous driving computer; the second fused location in a case that no failure is detected in the second autonomous driving computer; or the first raw location in a case that a failure is detected in the first autonomous driving computer.
13. The system of clause 11, wherein the second vehicle control unit is configured to use at least one of: the second fused location in a case that no failure is detected in the first autonomous driving computer; the first fused location in a case that no failure is detected in the second autonomous driving computer; or the second raw location in a case that a failure is detected in the second autonomous driving computer.
14. A vehicle safety system for controlling a vehicle, comprising:
   an object detection module including a set of sensors configured to detect objects proximate to the vehicle and a control unit coupled to the set of sensors to provide object information to first and second vehicle control units;
   a first localization device configured to generate location information that includes a first raw location of the vehicle;
   a second localization device configured to generate location information that includes a second raw location of the vehicle;
   a first autonomous driving computer coupled to the first localization device to generate location information that includes a first fused location of the vehicle based on the first raw location, the first autonomous driving computer including a first vehicle control unit configured to perform operations for identifying safety risks based on at least one of the first raw location, the first fused location, or the object information; and
   a second autonomous driving computer coupled to the second localization device to generate location information that include a second fused location of the vehicle based on the second raw location, the second autonomous driving computer including a second vehicle control unit configured to perform operations for identifying safety risks based on at least one of the second raw location, the second fused location, or the object information,
   wherein the first and second vehicle control units operate independently of each other.
15. The system of clause 14, wherein the first and second vehicle control units are configured to perform operations for identifying safety risks based on the object information and at least one of the first raw location, the second raw location, the first fused location, or the second fused location.
16. The system of clause 14, wherein the first autonomous driving computer is configured to provide a first control signal to a primary control interface to perform safety features upon detecting the safety risks.
17. The system of clause 16, wherein the second autonomous driving computer is configured to supplement the first autonomous driving computer to provide a second control signal to a secondary control interface to control the vehicle upon detecting the safety risks.
18. The system of clause 16, wherein the second autonomous driving computer is configured to provide a second control signal to a secondary control interface to control the vehicle in response to detecting that a failure has occurred in the first autonomous driving computer.
19. The system of clause 14, wherein the first vehicle control unit is configured to directly receive, from the first localization device, the location information that includes the first raw location of the vehicle.
20. The system of clause 14, wherein the second vehicle control unit is configured to directly receive, from the second localization device, the location information that includes the second raw location of the vehicle.

## Claims

1. A method of controlling operation of an autonomous vehicle, comprising:
monitoring, by a processor of a vehicle controller system, an operation of an autonomous vehicle controller onboard the autonomous vehicle;
determining, during the monitoring, that a fault condition has occurred in the operation of the autonomous vehicle controller; and
taking control of navigation of the autonomous vehicle based on the determining that the fault condition has occurred,
wherein the taking control of navigation includes navigating the autonomous vehicle using a dedicated set of sensors for the navigation,
wherein the dedicated set of sensors is different from a main set of sensors used by the autonomous vehicle controller.

2. The method of claim 1, wherein the using of the dedicated set of sensors includes using raw sensor data that is obtained directly from the dedicated set of sensors.

3. The method of claim 2, wherein the using of the raw sensor data comprises:
determining, during the monitoring, that a fault condition has occurred in the main set of sensors; and
obtaining the raw sensor data from the dedicated set of sensors.

4. The method of any preceding claim, wherein the vehicle controller unit includes a redundant vehicle control unit, and wherein the taking control of navigation includes switching the autonomous vehicle controller to the redundant vehicle control unit in response to determining that the fault condition has occurred.

5. The method of any preceding claim, wherein the main set of sensors comprises one or more of a Global Positioning System, a first inertial measurement unit, a first camera and a first radar.

6. The method of any preceding claim, wherein the main set of sensors has a first configuration and the dedicated set of sensors has a second configuration, wherein at least one of:
the dedicated set of sensors are encased in weather-proof casing; and
the dedicated set of sensors comprise electronics having a higher mean time between failure compared to the main set of sensors.

7. An in-vehicle computing system for controlling operation of an autonomous vehicle, comprising:
one or more processors; and
a memory including processing instructions which, when executed by the one or more processors, cause the in-vehicle computer to perform operations comprising:
monitoring an operation of an autonomous vehicle controller onboard an autonomous vehicle;
determining, during the monitoring, that a fault condition has occurred in the operation of the autonomous vehicle controller; and
taking control of navigation of the autonomous vehicle based on the determining that the fault condition has occurred,
wherein the taking control of navigation includes navigating the autonomous vehicle using a dedicated set of sensors for the navigation,
wherein the dedicated set of sensors is different from a main set of sensors used by the autonomous vehicle controller.

8. The in-vehicle computing system of claim 7, wherein the using of the dedicated set of sensors includes using raw sensor data that is obtained directly from the dedicated set of sensors.

9. The in-vehicle computing system of claim 8, wherein the using of the raw sensor data comprises:
determining, during the monitoring, that a fault condition has occurred in the main set of sensors; and
obtaining the raw sensor data from the dedicated set of sensors.

10. The in-vehicle computing system of any of claims 7 to 9, wherein the vehicle controller unit includes a redundant vehicle control unit, and wherein the taking control of navigation includes switching the autonomous vehicle controller to the redundant vehicle control unit in response to determining that the fault condition has occurred.

11. The in-vehicle computing system of any of claims 7 to 10, wherein the main set of sensors comprises one or more of a Global Positioning System, a first inertial measurement unit, a first camera and a first radar.

12. The in-vehicle computing system of any of claims 7 to 11, wherein the main set of sensors has a first configuration and the dedicated set of sensors has a second configuration, wherein at least one of:
the dedicated set of sensors are encased in weather-proof casing; and
the dedicated set of sensors comprise electronics having a higher mean time between failure compared to the main set of sensors.

13. The in-vehicle computing system of any of claims 7 to 12, wherein the main set of sensors is coupled to a first power source configured to power the main set of sensors, and the dedicated set of sensors is coupled to a second power source configured to power the dedicated set of sensors, the first power source being different from the second power source.

14. A computer program including instructions which, when run on a data processing system, cause the data processing system to perform the method according to any of claims 1 to 6.

15. A computer-readable medium including the computer program of claim 14.
